# EUROPEAN PATENT APPLICATION

(11) **EP 1 741 689 A2**
(43) Veröffentlichungstag der Anmeldung: **10.01.2007**
(21) Anmeldenummer: 06014128.0
(22) Anmeldetag: 07.07.2006
(51) Int. Cl.: C05F 17/02, C05F 9/04, B65D 6/24

(54) **Behälter, insbesondere Kompostbehälter**

(30) Priorität: 07.07.2005 DE 202005010721 U
(71) Anmelder: Albrecht Braun GmbH, 73338 Amstetten (DE)
(72) Erfinder: Braun, Albrecht, D-89075 Ulm (DE); Braun, Wilfried, D-89173 Lonsee (DE)
(74) Vertreter: Popp, Eugen

(57) **Zusammenfassung**

Behälter, insbesondere Kompostbehälter (10), dessen Seitenwände (11, 12, 13, 14) jeweils aus einer Vielzahl von endseitig über Eck verzahnend ineinander gefügten Platten (15), insbesondere Leichtbeton, oder dergleichen hergestellt sind. Im Eckbereich (16) sind die ineinander gefügten Platten (15) durch einen bei Bedarf entfernbaren Vertikalstab (17) zusammengehalten.

## Beschreibung

Die vorliegende Erfindung betrifft einen Behälter, insbesondere Kompostbehälter, dessen Seitenwände jeweils aus einer Vielzahl von endseitig über Eck verzahnend ineinander gefügten Platten aus Beton, insbesondere Leichtbeton hergestellt sind.

Des weiteren betrifft die vorliegende Erfindung einen Bausatz für einen aus vorgefertigten langgestreckten Platten aus Beton, insbesondere Leichtbeton, bestehenden Kompostbehälter.

Vollständig oder teilweise aus Betonfertigbauteilen aufgebaute zerlegbare Kompostbehälter sind in verschiedenen Ausführungen bekannt. Dabei gilt es stets, ein System zur Verfügung zu stellen, welches einen raschen Auf- und Abbau ohne Zuhilfenahme zusätzlicher Bauelemente ermöglicht, wobei die Betonfertigbauteile ebenfalls einfach in der Formgebung sein sollen, um diese kostengünstig herstellen zu können. Außerdem wird stets darauf geachtet, dass sich weitgehend über die Behälterinnenmaße erstreckende Belüftungsschlitze vorhanden sind. Beispielhaft wird bezüglich des Standes der Technik auf die DE 83 01 309 U1 oder DE 77 33 234 U1 oder EP 0 361 002 B1, EP 0 860 109 A2 oder DE 1 899 430 U1 verwiesen. All diesen bekannten Konstruktionen liegen die vorgenannten Ziele zugrunde, wobei bei allen vorbekannten Konstruktionen das Prinzip zur Anwendung gelangt, die Betonplatten zur Herstellung der Seitenwände über Eck verzahnend ineinander zu fügen. Da Betonplatten jedoch relativ schwer und dementsprechend unhandlich sind, gestaltet sich die über Eck-Verhakung der einzelnen Betonplatten bei relativ engen Passungen entsprechend schwierig. Verkantungen der Betonplatten lassen sich nur schwer vermeiden.

Der vorliegenden Erfindung liegt daher die Aufgabe zugrunde, ein System zur Verfügung zu stellen, welches gegenüber dem Stand der Technik erheblich leichter montierbar sowie demontierbar ist.

Diese Aufgabe wird bezüglich eines Kompostbehälter durch die kennzeichnenden Merkmale des Anspruches 1 und bezüglich eines Bausatzes durch die Merkmale des Anspruches 10 gelöst. Vorteilhaft bei der erfindungsgemäßen Lösung ist, dass zur Errichtung der Seitenwände des Behälters die dafür zur Verfügung gestellten Betonplatten lediglich auf im Eckbereich aufgestellte Vertikalstäbe "aufgefädelt" werden müssen. Durch dieses Konstruktionsprinzip ist eine umgreifende Verhakung von über Eck angeordneten Betonplatten entbehrlich. Die über Eck benachbarten Betonplatten müssen lediglich abwechselnd von oben her auf die erwähnten Vertikalstäbe aufgeschoben werden. Dadurch stellt sich die verzahnende Ineinanderfügung selbsttätig ein. Bei Demontage wird umgekehrt vorgegangen. Soll eine Seitenwand zur Entleerung des Kompostbehälters entfernt werden, brauchen lediglich die beiden diese fragliche Seitenwand begrenzenden Vertikalstäbe herausgezogen zu werden. Dann können die Betonplatten problemlos nach vorne aus der über Eck-Verzahnung herausgenommen werden, so dass die entsprechende Behälterseite frei zugänglich wird. Die Einfügung der Betonplatten erfolgt in umgekehrter Weise, wobei dann nach Einfügung sämtlicher Betonplatten der vorher entfernten Seitenwand die beiden diese fragliche Seitenwand begrenzenden Vertikalstäbe wieder eingefügt werden, um eine dauerhafte Eckverbindung zwischen dieser Seitenwand und den unmittelbar benachbarten Seitenwänden zu erhalten.

Der Bausatz zur Errichtung eines erfindungsgemäßen Kompostbehälters umfasst vorgefertigte langgestreckte Betonplatten, die jeweils identisch gestaltet sind und im Übrigen die konstruktiven bzw. formtechnischen Merkmale gemäß Anspruch 10 aufweisen. Vorteilhafte Ausführungsformen bzw. konstruktive Details der verwendeten Betonplatten sind in den Ansprüchen 11 bis 13 angegeben.

Bezüglich des Behälters beschreiben die Ansprüche 2 bis 9 vorteilhafte konstruktive und formtechnische Details bzw. bevorzugte Ausführungsformen.

In diesem Zusammenhang sei insbesondere auch auf die Verwendung von Sockelplatten hingewiesen, die zur Abstützung der Ecken einschließlich der dort angeordneten Vertikalstäbe des Behälters gegenüber dem Untergrund dienen.

Um das "Auf- bzw. Abfädeln" der Betonplatten von den Vertikalstäben zu erleichtern, sind die Bohrungen in den Endbereichen der Betonplatten, durch die sich die Vertikalstäbe hindurcherstrecken sollen, mit einem Innendurchmesser versehen, der deutlich größer ist als der Außendurchmesser der zugeordneten Vertikalstäbe. Vorzugsweise werden die Bohrungen durch im Beton eingegossene Kunststoff-Rohrabschnitte definiert. Damit lassen sich die Vertikalstäbe im Wesentlichen zwängungs- und klemmungsfrei durch die Bohrungen hindurchschieben bzw. aus diesen bei Bedarf wieder herausziehen.

Die zur Errichtung eines erfindungsgemäßen Kompostbehälters verwendeten Betonplatten sind vorzugsweise in dunkler Farbe gehalten mit der Folge, dass die Betonplatten bei Sonnenschein Wärme aufnehmen, die die Verrottung des zu kompostierenden Materials beschleunigt.

Natürlich sind auch bei den erfindungsgemäßen Behältern Maßnahmen getroffen, die eine seitliche Belüftung des zu kompostierenden Materials sicher stellen. Diesbezüglich wird auf die Ansprüche 5 und 6 verwiesen.

Um dem unbefangenen Betrachter des erfindungsgemäßen Behälters das Gefühl zu vermitteln, dass die Wandelemente aus Holz hergestellt sind, sind die im montierten Zustand des Behälters nach außen gewandten Sichtseiten der Betonplatten jeweils mit einer Holzmaserung versehen. Diese erhält man durch Herstellung in Formen, die durch grobmaserige Holzschalbretter begrenzt sind.

Nachstehend wird eine bevorzugte Ausführungsform eines erfindungsgemäß ausgebildeten Kompostbehälters sowie der dafür verwendeten Betonplatten anhand der beigefügten Zeichnungen erläutert. Des weiteren wird auf anhand der beigefügten Zeichnungen die Herstellung eines Kompostbehälters aus den beschriebenen Betonplatten dargestellt. Im Einzelnen zeigt die Zeichnung in:
- Fig. 1: einen rechteckförmigen Kompostbehälter aus erfindungsgemäß ausgebildeten Betonplatten in perspektivischer Ansicht;
- Fig. 2: einen Bausatz zur Errichtung eines Kompostbehälters gemäß Fig. 1 unter Darstellung sämtlicher Bauelemente jeweils in perspektivischer Ansicht;
- Fig. 3: eine schematische Seitenansicht eines aus den Bauelementen gemäß Fig. 2 hergestellten Kompostbehälters;
- Fig. 4: eine Draufsicht auf einen Behälter gemäß Fig. 3; und
- Fig. 5a bis 5e: den Ablauf für die Errichtung eines Kompostbehälters gemäß Fig. 1 aus dem Bausatz gemäß Fig. 2, jeweils in perspektivischer Ansicht.

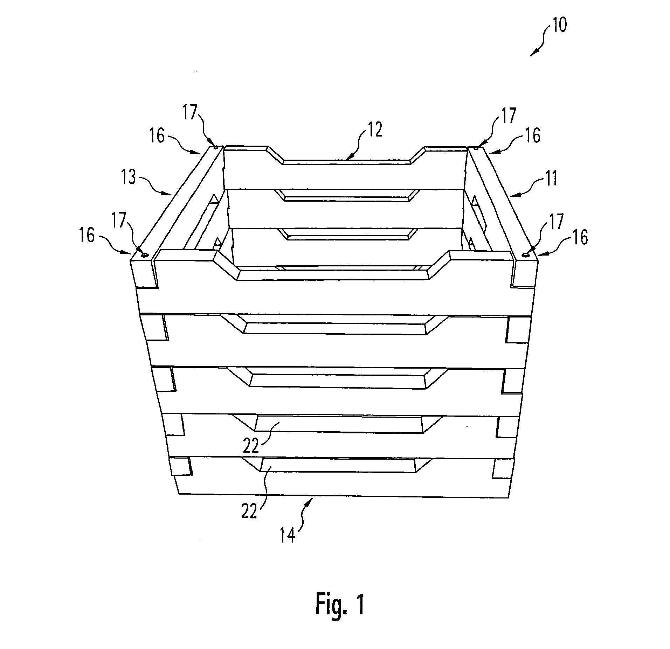

In Fig. 1 ist ein Kompostbehälter 10 perspektivisch dargestellt, dessen vier Seitenwände 11, 12, 13, 14 jeweils aus einer Vielzahl von, nämlich fünf endseitig über Eck verzahnend ineinander gefügten Platten 15 aus Beton, insbesondere Leichbeton, hergestellt sind. Statt aus Beton können die Platten 15 auch aus Kunststoff, Holz, Leichtmetall oder einem Verbund dieser Materialien bestehen. Vorzugsweise wird als Werkstoff jedoch Leichtbeton verwendet.

Im Eckbereich 16 sind die ineinandergefügten Platten 15 durch einen bei Bedarf entfernbaren Vertikalstab 17 zusammengehalten. In Fig. 1 ist nur das obere Ende der Vertikalstäbe 17 sichtbar, und zwar in Form eines dunklen Punktes.

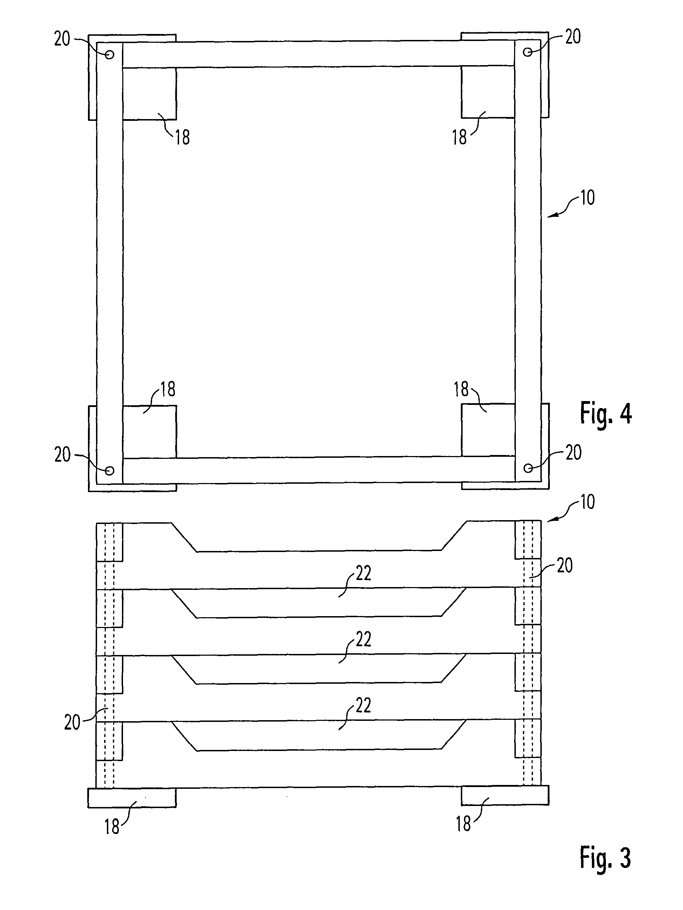

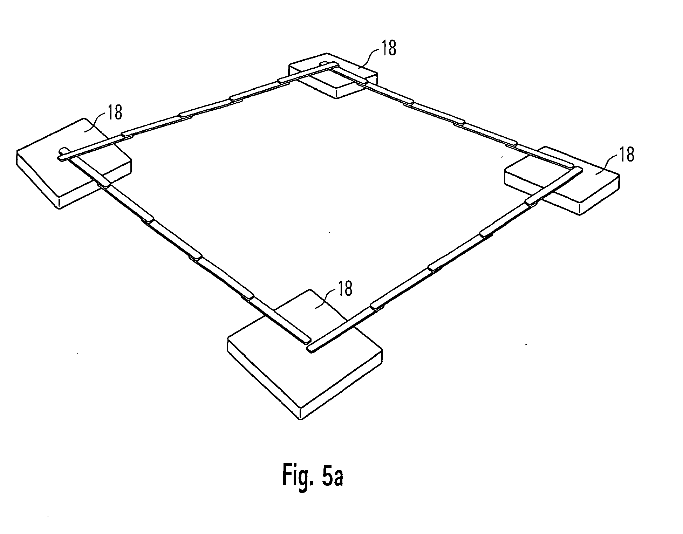

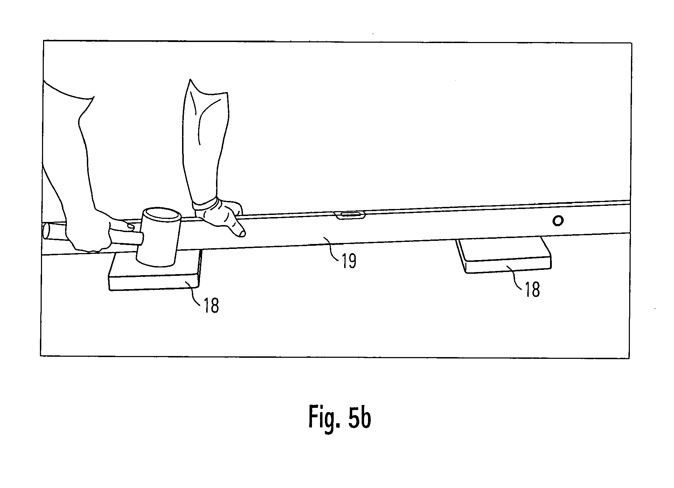

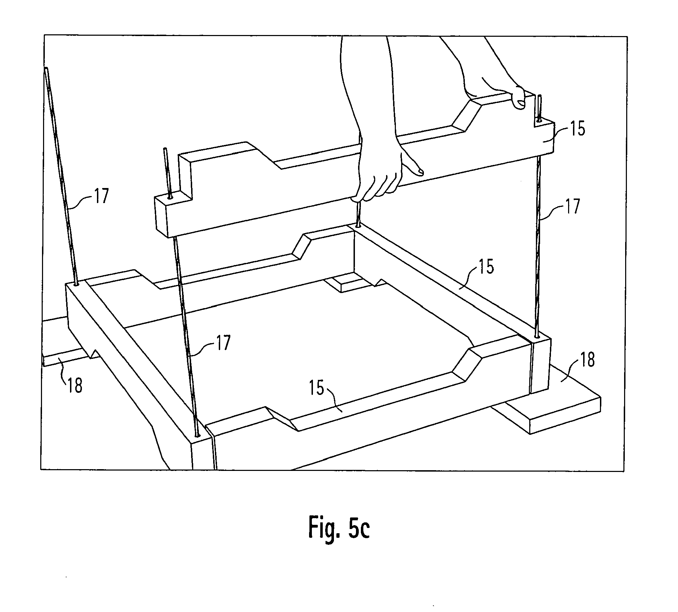

Entsprechend den Figuren 3, 4 und 5a, 5b, 5c und 5d sind die Ecken 16 einschließlich Vertikalstab 17 jeweils auf einer Sockelplatte 18 gegenüber dem Untergrund abgestützt. Entsprechend Fig. 5a wird mittels den Sockelplatten zunächst der Standort und die Größe des Kompostbehälters festgelegt. Die Sockelplatten 18 werden auf den Boden gesetzt oder in eine Grasnabe eingegraben. Entsprechend Fig. 5b werden dann die vier Sockelplatten 18 auf Höhe ausgerichtet mittels einer über die Sockelplatten gelegten Ausrichtlatte 19 und einer darauf angelegten Wasserwaage.

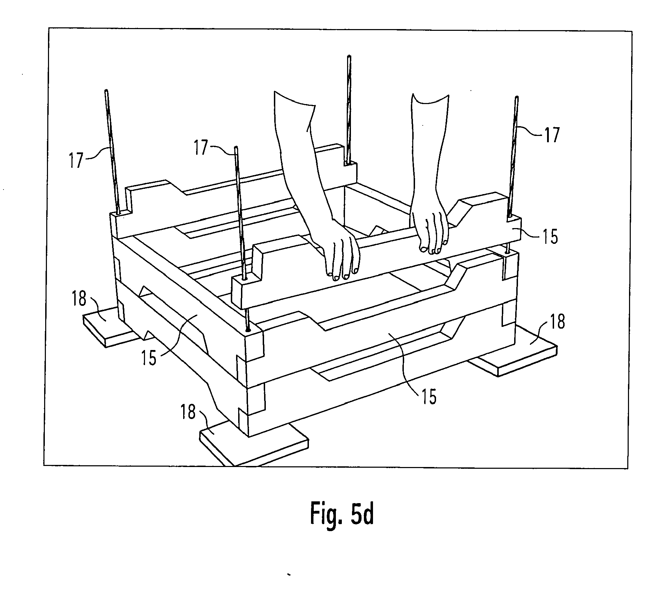

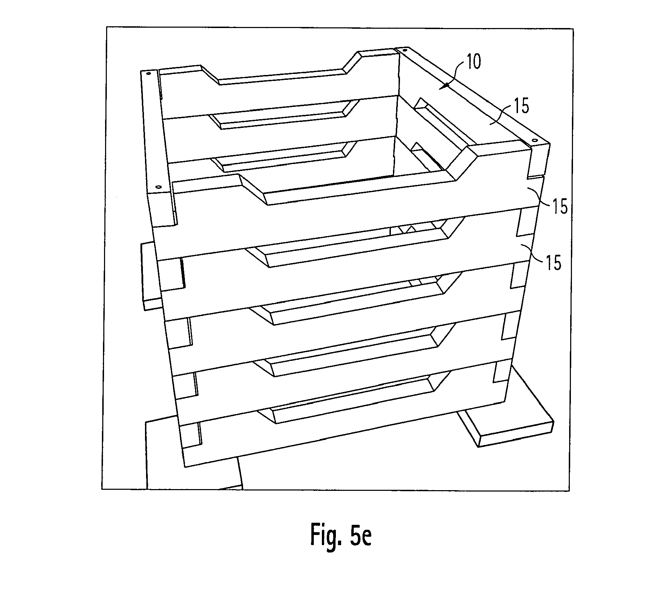

Anschließend werden auf den Sockelplatten 18 vier Betonplatten im Quadrat aufgelegt und ausgerichtet derart, dass an den Plattenenden ausgebildete, sich in Plattenebene erstreckende Bohrungen miteinander fluchten, so dass durch diese Bohrungen jeweils ein Vertikalstab 17 eingesteckt werden kann. Über diese Vertikalstäbe 17 werden dann die restlichen Bauelemente, nämlich Betonplatten 15 lagenweise eingeführt bzw. "aufgefädelt" (siehe Fig. 5d), bis letztlich ein Kompostbehälter entsprechend Fig. 1 bzw. entsprechend Fig. 5e erhalten ist.

Die erwähnten Bohrungen an den Plattenenden sind in den Figuren 3 und 4 jeweils mit der Bezugsziffer 20 gekennzeichnet.

Die einzelnen Platten 15 sind, wie bereits eingangs dargelegt, vorzugsweise dunkel, insbesondere dunkelgrau, dunkelgrün oder dunkelbraun gefärbt, um Umgebungswärme aufzunehmen, die dann für die Kompostierung über Nacht wieder abgegeben wird.

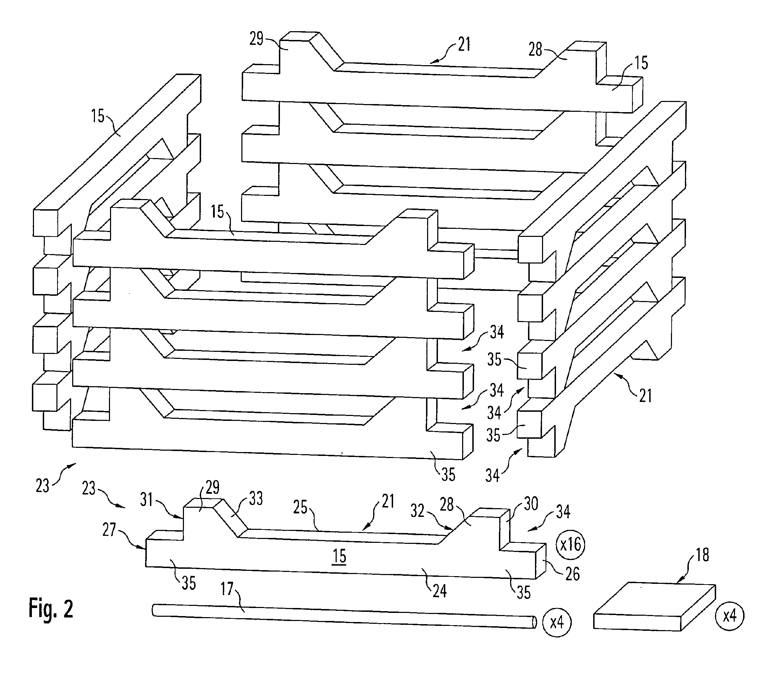

Die einzelnen Platten 15 sind jeweils identisch ausgebildet, wie die Fig. 2 sehr gut erkennen lässt. Sie umfassen an einer ihrer Längsseite jeweils eine Ausnehmung, hier trapezförmige Ausnehmung 21, die sich über nahezu das gesamte Innenmaß des aus den Behältern 15 hergestellten Behälters 10 erstreckt. Damit werden beim "Auffädeln" der Platten 15 auf die Vertikalstäbe 17 zwangsläufig horizontale Lüftungsschlitze 22 gebildet.

Alternativ können die Platten 15 selbst loch-, schlitz- oder langlochartige Ausnehmungen umfassen. Form- und herstellungstechnisch ist die dargestellte Ausführungsform jedoch einfacher und dementsprechend günstiger.

Entsprechend Fig. 2 umfasst ein Bausatz 23 für die Herstellung eines Kompostbehälter gemäß Fig. 1 bzw. gemäß Fig. 5e sechzehn Platten 15, vier Vertikalstäbe 17 und vier Sockelplatten 18. Die Anzahl der vorher erwähnten Bauelemente ist in Fig. 2 jeweils mit der Angabe "x 16", "x 4" und "x 4" in Zuordnung zu den einzelnen Bauelementen dargestellt.

Fig. 2 zeigt auch, wie die einzelnen Platten 15 zur Ausbildung der Seitenwände 11, 12, 13 und 14 übereinander gelegt werden. Des weiteren lässt Fig. 2 sehr gut erkennen, dass jede Platte 15 einen langgestreckten Rechteckriegel 24 umfasst, dessen einen Längsschmalseite 25 im Abstand von den stirnseitigen Enden 26, 27 jeweils ein sich in Plattenebene erstreckender Vorsprung 28, 29 ausgebildet ist, dessen äußere Stirnseite 30, 31 sich parallel zur Stirnseite 26, 27 des Rechteckriegels 24 und dessen innere Stirnseite 32, 33 sich schräg nach innen erstreckt. Die Höhe der Vorsprünge 28, 29 entspricht etwa der Höhe des Rechteckriegels 24, so dass im Eckbereich zwei umgekehrt ausgerichtete Platten 15 bündig miteinander verzahnt werden können, sowie dies z. B. Fig. 3, aber auch die Figuren 5d und 5e sowie Fig. 1 erkennen lässt. Zu diesem Zweck entspricht auch der Abstand zwischen einer Stirnseite 26 bzw. 27 des Rechteckriegels 24 und der benachbarten äußeren Stirnseite 30 bzw. 31 des Vorsprungs 28 bzw. 29 etwa der Wandstärke bzw. Dicke einer Platte 15.

Für die Errichtung eines Kompostbehälters 10 aus den Platten 15 entsprechend einem Bausatz gemäß Fig. 2 ist darauf zu achten, dass die Platten 15 der einen Behälterseite mit den Vorsprüngen 28, 29 jeweils nach oben ragend und die Platten 15 der jeweils angrenzenden Behälterseiten mit den Vorsprüngen 28, 29 jeweils nach unten ragend oder umgekehrt angeordnet und eckseitig ineinander gesteckt sind. Bei einem rechteckförmigen oder quadratischen Kompostbehälter sind die Platten 15 gegenüberliegender Seiten jeweils in gleicher Weise ausgerichtet, d. h. mit den Vorsprüngen 28, 29 entweder nach oben oder nach unten weisend.

Der in Fig. 2 dargestellte Bausatz für einen aus vorgefertigten, langgestreckten Betonplatten 15 bestehenden Behälter, insbesondere Kompostbehälter 10 zur Aufstellung auf einer Bodenfläche umfasst also (n) Platten 15, wobei (n) eine Gerade und durch die Anzahl- der Ecken des zu errichtenden Behälters teilbare Zahl ist. Die stirnseitigen Enden der Platten weisen jeweils eine rechteckförmige Aussparung 34 auf, deren sich parallel zur Längserstreckung erstreckende Kante eine Länge aufweist, die der Wandstärke bzw. Dicke einer Platte 15 entspricht, und deren sich senkrecht dazu erstreckende Kante eine Höhe entsprechend der Höhe des in die Aussparung 34 einpassbaren Endabschnitt 35 der über Eck ansetzbaren Platte 15 aufweist. Die vorher erwähnten Kanten der Ausnehmung 34 sind vorstehend bereits im Zusammenhang mit der Höhe und dem Abstand der äußeren Stirnseiten 30, 31 von den jeweils zugeordneten Stirnseiten 26, 27 des Rechteckriegels 24 einer jeden Platte 15 beschrieben und definiert worden.

Des weiteren umfasst der Bausatz gemäß Fig. 2 vier Vertikalstäbe 17 aus entweder Holz, Kunststoff oder Metall, insbesondere Baustahl. Grundsätzlich umfasst der Bausatz eine der Anzahl der Behälterecken entsprechende Anzahl von Vertikalstäben 17, deren Länge jeweils der Höhe einer Seitenwand 11, 12, 13, 14 des fertiggestellten Behälters 10 ist.

Schließlich kann der Bausatz noch der Anzahl der Ecken des Behälters 10 entsprechende Anzahl von Sockelplatten 18 zur bodenseitigen Unterstützung der Behälterecken 16 umfassen.

Vorzugsweise weisen die im montierten Zustand des Behälters nach außen gewandten Sichtseiten der Platten 15 jeweils eine deutlich sichtbare Holzmaserung auf. Dadurch gewinnt der ungefangene Betrachter den Eindruck, dass der Kompostbehälter 10 aus Holzplatten gefertigt ist.

Ergänzend zu der vorbeschriebenen Kompostbehälter-Konstruktion sei noch darauf hingewiesen, dass des im Bereich der vorliegenden Erfindung liegt, an der Oberseite des Kompostbehälters einen Deckel mit Sieböffnung oder in Form eines Siebes anzuordnen. Dabei kann es sich entweder um einen aufsteckbaren oder Klapp-Deckel handeln. Im letztgenannten Fall wird der Deckel bzw. das Sieb über zwei Scharniergelenke an der Oberseite einer der Seitenwände 11, 12, 13, 14 befestigt bzw. angelenkt. Vorzugsweise erfolgt die Anlenkung so, dass das Sieb bzw. der Deckel mit Sieböffnung nach einer Seite so weit geklappt werden kann, dass die den Scharniergelenken gegenüberliegende Seite des Siebes bzw. Siebdeckels auf dem Boden abgestützt ist derart, dass das Sieb bzw.der Siebdeckel sich schräg zur zugewandten Seitenwand des Kompostbehälters erstreckt. damit ist eine dem Kompostbehälter zugeordnete Siebeinrichtung geschaffen, z. B. für das kompostierte Material.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen:

- 10: Kompostbehälter
- 11: Seitenwand
- 12: Seitenwand
- 13: Seitenwand
- 14: Seitenwand
- 15: Betonplatte
- 16: Eckbereich
- 17: Vertikalstab
- 18: Sockelplatte
- 19: Ausrichtlatte
- 20: Bohrung
- 21: Ausnehmung
- 22: Lüftungsschlitz
- 23: Bausatz
- 24: Rechteckriegel
- 25: Längsschmalseite
- 26: Stirnseite
- 27: Stirnseite
- 28: Vorsprung
- 29: Vorsprung
- 30: Äußere Stirnseite des Vorsprungs
- 31: Äußere Stirnseite des Vorsprungs
- 32: Innere Stirnseite des Vorsprungs
- 33: Innere Stirnseite des Vorsprungs
- 34: Aussparung
- 35: Endabschnitt

## Patentansprüche

1. Behälter, insbesondere Kompostbehälter (10), dessen Seitenwände (11, 12, 13, 14) jeweils aus einer Vielzahl von endseitig über Eck verzahnend ineinandergefügten Platten (15) aus Beton, insbesondere Leichtbeton, Kunststoff, Holz, Leichtmetall oder einem Verbund dieser Materialien, hergestellt sind,
**dadurch gekennzeichnet,dass**
im Eckbereich (16) die ineinandergefügten Platten (15) durch einen bei Bedarf entfernbaren Vertikalstab (17) zusammengehalten sind.

2. Behälter nach Anspruch 1,
**dadurch gekennzeichnet,dass**
die Ecken (16) einschließlich Vertikalstab (17) jeweils auf einer Sockelplatte (18) abgestützt sind.

3. Behälter nach Anspruch 1 oder 2,
**dadurch gekennzeichnet,dass**
sich die Vertikalstäbe (17) durch an den Plattenenden in Plattenebene erstreckend ausgebildete Bohrungen (20) hindurcherstrecken, deren Innendurchmesser jeweils größer ist als der Außendurchmesser der Vertikalstäbe (17).

4. Behälter nach einem der Ansprüche 1 bis 3,
**dadurch gekennzeichnet,dass**
die Platten (15) dunkel, insbesondere dunkelgrau, dunkelgrün oder dunkelbraun gefärbt sind.

5. Behälter nach einem der Ansprüche 1 bis 4,
**dadurch gekennzeichnet, dass**
die Platten (15) jeweils loch-, schlitz- oder langlochartige Ausnehmungen umfassen.

6. Behälter nach einem der Ansprüche 1 bis 5,
**dadurch gekennzeichnet,dass**
die Platten (15) an wenigstens einer Längsseite jeweils eine Ausnehmung, insbesondere trapezförmige Ausnehmung (21) aufweisen, die sich vorzugsweise über nahezu das gesamte Innenmaß des aus den Platten (15) hergestellten Behälters (10) erstreckt.

7. Behälter nach einem der Ansprüche 1 bis 6,
**dadurch gekennzeichnet,dass**
jede Platte (15) einen langgestreckten Rechteckriegel (24) umfasst, an dessen einen Längsschmalseite (25) im Abstand von den stirnseitigen Enden (26, 27) jeweils ein sich in Plattenebene erstreckender Vorsprung (28, 29) ausgebildet ist, dessen äußere Stirnseite (30, 31) sich etwa parallel zur Stirnseite (26, 27) des Rechteckriegels (24), und dessen innere Stirnseite (32, 33) sich ebenfalls etwa parallel zur Stirnseite (26, 27) des Rechteckriegels (24) oder schräg nach innen erstreckt, und dessen Höhe etwa der Höhe des Rechteckriegels (24) entspricht.

8. Behälter nach Anspruche 7,
**dadurch gekennzeichnet,dass**
der Abstand zwischen einer Stirnseite (26 bzw. 27) des Rechteckriegels (24) und der äußeren Stirnseite (30 bzw. 31) des jeweils benachbarten Vorsprungs (28 bzw. 29) etwa der Wandstärke bzw. Dicker einer Platte (15) entspricht.

9. Behälter nach Anspruche 7 oder 8,
**dadurch gekennzeichnet,dass**
die Platten (15) der einen Behälterseite mit den Vorsprüngen (28, 29) jeweils nach oben ragend und die Platten (15) der jeweils angrenzenden Behälterseiten mit den Vorsprüngen (28, 29) jeweils nach unten ragend, oder umgekehrt, angeordnet und eckseitig ineinander gesteckt sind.

10. Bausatz für einen aus vorgefertigten, langgestreckten Platten (15) aus Beton, insbesondere Leichtbeton, Kunststoff, Holz, Leichtmetall oder einem Verbund dieser Materialien bestehenden Behälter, insbesondere Kompostbehälter (10), zur Aufstellung auf einer Bodenfläche,
**gekennzeichnet durch**
(n) Platten (15), wobei (n) eine gerade und **durch** die Anzahl der Ecken des zu errichtenden Behälters (10) teilbare Zahl ist, und an deren stirnseitigen Endbereichen jeweils eine rechteckförmige Aussparung (34) ausgebildet ist, deren sich parallel zur Längserstreckung erstreckenden Kante eine Länge aufweist, die der Wandstärke bzw. Dicke einer Platte (15) entspricht, und deren sich senkrecht dazu erstreckende Kante eine Höhe entsprechend der Höhe des in die Aussparung (34) einpassbaren Endabschnitt (35) einer über Eck ansetzbaren Platte (15) aufweist.

11. Bausatz nach Anspruch 10,
**dadurch gekennzeichnet,dass**
dieser eine der Anzahl der Behälterecken entsprechende Anzahl von Vertikalstäben (17) aus Holz, Kunststoff oder Metall, insbesondere Baustahl, umfasst, deren Länge der Höhe einer Seitenwand (11, 12, 13, 14) des fertiggestellten Behälters (10) ist.

12. Bausatz nach Anspruch 10 oder 11,
**dadurch gekennzeichnet,dass**
dieser eine der Anzahl der Ecken des Behälters (10) entsprechende Anzahl von Sockelplatten (18) zur bodenseitigen Unterstützung der Behälterecken (16) umfasst.

13. Bausatz nach einem der Ansprüche 10 bis 12,
**dadurch gekennzeichnet,dass**
die im montierten Zustand des Behälters (10) nach außen gewandten Sichtseiten der Platten (15) jeweils eine vorbestimmte Oberflächenstruktur, insbesondere Holzmaserung aufweisen.
